Europäisches Patentamt

European Patent Office

Office européen des brevets

(19)

(11) Veröffentlichungsnummer: **0 510 322 A2**

## (12) EUROPÄISCHE PATENTANMELDUNG

(21) Anmeldenummer: **92102718.1**

(22) Anmeldetag: **19.02.92**

(51) Int. Cl.⁵: **H04Q 7/04**, H04B 7/26

(30) Priorität: **24.04.91 DE 4113286**

(43) Veröffentlichungstag der Anmeldung:
**28.10.92 Patentblatt 92/44**

(84) Benannte Vertragsstaaten:
**AT DE DK FR GB IT NL SE**

(71) Anmelder: **ROBERT BOSCH GMBH**
**Postfach 30 02 20**
**W-7000 Stuttgart 30(DE)**

(72) Erfinder: **Ketterling, Hans-Peter, Dipl.-Ing.**
**Boelckestrasse 74**
**W-1000 Berlin 42(DE)**

(74) Vertreter: **Schmidt, Hans-Ekhardt, Dipl.-Ing.**
**Robert Bosch GmbH Geschäftsbereich**
**Mobile Kommunikation Patent- und**
**Lizenzabteilung Forckenbeckstrasse 9-13**
**W-1000 Berlin 33(DE)**

(54) **Digitales Funktelefonnetz.**

(57) 2.1 Bei einem digitalen Funktelefonnetz mit ortsfesten Funkstationen (10) und diesen zugeordneten mobilen Funkstationen (14, 15), deren für den Betrieb benötigte Software in elektronischen Speichern (23, 24) abgelegt ist, muß insbesondere nach der ersten Inbetriebnahme des Funktelefonnetzes eine Veränderung oder ein Austausch der Software stattfinden.

2.2 Damit die Modifikation der Software mit einem geringen Aufwand möglich ist, wird zumindest ein Teil der Software der mobilen Funkstationen (14, 15) in löschbaren oder veränderbaren Bereichen des elektronischen Speichers (23, 24) abgelegt. Die derart gespeicherte Software kann von einer ortsfesten Funkstation aus oder über sie per Datenübertragung geändert oder ausgetauscht werden.

2.3 Ein bevorzugtes Anwendungsgebiet für das erfindungsgemäße Funktelefonnetz ist das Funktelefonnetz GSM.

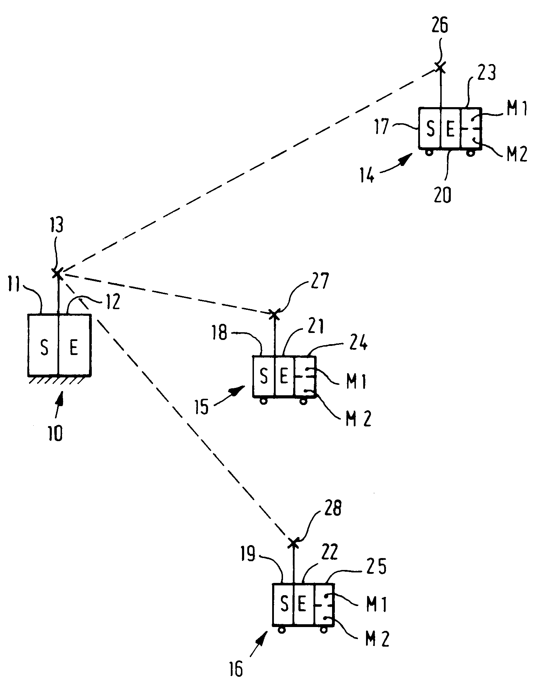

3. Die Zeichnung zeigt ein stark vereinfachtes Blockschaltbild des Funktelefonnetzes.

EP 0 510 322 A2

Die Erfindung geht von einem digitalen Funktelefonnetz nach dem Oberbegriff des Anspruchs 1 aus.

Nach der ersten Inbetriebnahme eines digitalen Funktelefonnetzes müssen erfahrungsgemäß sowohl die Software für die mobilen Funkstationen, im folgenden Mobilstationen genannt, als auch die Software für die Infrastruktur des Netzes im Sinne einer Optimierung modifiziert werden. Das Updating bzw. der Austausch von Software-Paketen für die Infrastruktur ist mit einem großen Aufwand verbunden. Verglichen damit setzt aber das Auf-den-neuesten-Stand-bringen der Software bei den Mobilstationen einen noch größeren wirtschaftlichen und technischen Aufwand voraus, weil alle zu dem digitalen Funktelefonnetz gehörenden Mobilstationen zu entsprechend eingerichteten Servicestellen bzw. Funkgeräte-Händlern gebracht werden müssen. Die dort vorzunehmenden Softwareänderungen bzw. der Softwareaustausch verursachen üblicherweise einen Zeitaufwand von einer Stunde bis zu zwei Stunden pro Mobilstation einschließlich Montage und Tests. Darüber hinaus ist damit zu rechnen, daß bei vielen Mobilstationen, insbesondere bei Mobilstationen älteren Typs, eine Softwareänderung und ein Softwareaustausch wiederholt durchgeführt werden müssen, bis die gewünschten Funktionen einwandfrei erfüllt werden.

Der Erfindung liegt die Aufgabe zugrunde, ein digitales Funktelefonnetz nach dem Oberbegriff des Anspruchs 1 derart weiterzubilden, daß ein Softwareaustausch bzw. Softwareänderungen mit möglichst geringem Aufwand realisierbar sind.

Diese Aufgabe wird bei einem digitalen Funktelefonnetz nach dem Oberbegriff des Anspruchs 1 durch die im kennzeichnenden Teil dieses Anspruchs angegebenen Merkmale gelöst. Die mit der Erfindung erzielbaren Vorteile bestehen insbesondere darin, daß für eine Änderung oder einen Austausch der Software einer Mobilstation kein Transport der Mobilstation zu einer Servicestelle erforderlich ist. Außerdem braucht die Mobilstation zur Softwareänderung oder zum Softwareaustausch nicht geöffnet zu werden, da die erforderlichen Eingriffe per Datenübertragung über die Luftschnittstelle erfolgen. Ein weiterer Vorteil besteht darin, daß die Softwareänderung bzw. der Softwareaustausch für den Teilnehmer der Mobilstation automatisch abläuft, so daß er, wenn überhaupt, nur kurzzeitig durch die Datenübertragung am Telefonieren gehindert wird. Wird die Erfindung beispielsweise bei dem paneuropäischen Funktelefonnetz GSM angewendet, so ergibt sich ein weiterer Vorteil, wenn die die Grundfunktionen des Funktelefonnetzes nicht einschränkenden Teile der Software in den veränderbaren oder austauschbaren Speicherbereichen des elektronischen Speichers gespeichert sind. In diesem Fall werden also gezielt die erfahrungsgemäß zu ändernden oder auszutauschenden Softwareteile getrennt von der übrigen Software gespeichert. Daher verringert sich die Übertragungsdauer und Übertragungskapazität der für die Softwareänderungen oder den Softwareaustausch benötigten Daten.

Ein Ausführungsbeispiel der Erfindung ist in der Zeichnung an Hand einer einzigen Figur dargestellt und wird im folgenden näher erläutert.

Die Figur zeigt ein stark vereinfachtes Blockschaltbild eines digitalen mobilen Funktelefonnetzes mit einer ortsfesten Funkstation 10 mit einem Sendeteil 11, einem Empfangsteil 12 und einer Sende- und Empfangsantenne 13. Im Sendebereich der ortsfesten Funkstation 10 operieren mehrere Mobilstationen, von denen in der Figur nur drei Mobilstationen 14, 15, 16 gezeigt sind. Jede Mobilstation weist einen Sendeteil 17, 18, 19, einen Empfangsteil 20, 21, 22, einen mit dem Empfangsteil verbundenen elektronischen Speicher 23, 24, 25 sowie eine Sende- und Empfangsantenne 26, 27 und 28 auf.

Die Wirkungsweise des vorstehend beschriebenen digitalen Funktelefonnetzes, das ist vorzugsweise das paneuropäische Funktelefonnetz GSM, ist folgende.

Stellt sich nach der erstmaligen Inbetriebnahme des Funktelefonnetzes heraus, daß die in den elektronischen Speichern 23, 24, 25 der Mobilstationen 14, 15, 16 gespeicherte Software verändert oder ausgetauscht werden muß, so werden von der ortsfesten Funkstation 10 aus über deren Sende- und Empfangsantenne 13 an die einzelnen Mobilstationen 14, 15, 16 Daten übertragen, die in den elektronischen Speichern 23, 24 und 25 eine entsprechende Änderung oder einen entsprechenden Austausch der gespeicherten Software bewirken. Bei dem Funktelefonnetz GSM wird die Software vorzugsweise so strukturiert und in Unterblöcke aufgeteilt, daß der für die Grundfunktionen des Funktelefonnetzes erforderliche Softwareteil in einem ersten Speicherbereich M1 des elektronischen Speichers 23, 24, 25 fest gespeichert ist und daß der übrige Softwareteil in einem zweiten Speicherbereich M2 veränderbar oder austauschbar gespeichert ist. Im Falle des Updatings oder Austauschs braucht also normalerweise nur ein Bruchteil der gesamten Software geändert bzw. ausgetauscht zu werden. Da es auch vorkommen kann, daß ein einzuspeichernder Softwareblock einen größeren Speicherbereich benötigt als der vorherige Speicherblock, muß durch entsprechende Sprungmarken der Zugang zu einem anderen Speicherbereich geschaffen werden. In analoger Weise reicht es in manchen Fällen aus, bestimmte Teile der in den Speicherbereichen M2 gespeicherten Software zu deaktivieren bzw. zu löschen, indem sie durch Sprungmarken überbrückt werden.

Um eventuelle Probleme bei der Modifikation der Software auszuschließen, ist es erforderlich, daß die Software mindestens teilweise in zwei parallelen Bereichen untergebracht wird. Hierzu ist es zum einen erforderlich, daß ein änderbarer permanenter Speicher existiert, und zum anderen ein RAM-Bereich, in dem mindestens die Software, die zum Abarbeiten dieser Prozeduren benötigt wird, umkopiert werden kann, so daß das Problem vermieden wird, daß sich eine in Abarbeitung befindliche Software selbst ändern muß, was zu Funktionsstörungen führen könnte.

Bei der Datenübertragung muß auf der Seite der ortsfesten Funkstation 10 darauf geachtet werden, daß die Mobilstationen, in denen eine Änderung oder ein Austausch der Softwarebereiche vorgenommen werden soll, nicht nur mit ihrer Teilnehmernummer gerufen werden, weil der Teilnehmer mittels seiner Teilnehmerkarte unter Umständen gerade eine fremde Mobilstation für sich dienstbar gemacht haben könnte. Andererseits ist aber jede Mobilstation mit einer unverwechselbaren Identitätsnummer versehen, so daß man lediglich dafür zu sorgen braucht, daß die Übertragung der entsprechenden Software erst dann erfolgt, wenn die Teilnehmernummer und die Identitätsnummer der jeweils gerufenen Mobilstation von dieser bestätigt worden sind. Diese Identitätskennzeichnung ist für die Mobilstationen in dem Funktelefonnetz GSM ohnehin erforderlich, weil sie auch für andere Identifikationszwecke, wie zur Verhinderung von Mißbrauch, zur Sperrung von defekten Mobilstationen und dergleichen, vorgesehen ist.

Es muß weiterhin darauf geachtet werden, daß bei der Übertragung der Daten zwischen ortsfester Funkstation 10 und den Mobilstationen 14, 15, 16 eines der bekannten Sicherungskodeverfahren angewendet wird, damit Fehler beim Ändern oder Austauschen der Software der Mobilstationen verhindert werden. Außerdem müssen Check-Prozeduren vorgesehen sein, die in der ortsfesten Funkstation erkennen lassen, ob die Datenübertragung und das Einspeichern der Daten in den elektronischen Speicher 23, 24, 25 fehlerfrei erfolgt ist. Bei nicht ordnungsgemäßem Ändern oder Austauschen der Software muß der Vorgang noch einmal wiederholt werden. Die hierfür erforderlichen Check-Maßnahmen sind dem Fachmann aus anderen Funknetzen bekannt.

Die Datenübertragung sollte zu Zeiten durchgeführt werden, in denen das Funktelefonnetz wenig belastet ist bzw. in denen der Teilnehmer seine Mobilstation nicht benötigt. Von der ortsfesten Funkstation 10 aus könnte man ihm beispielsweise vor der Datenübertragung eine entsprechende Kurzmitteilung zukommen lassen, die er, im Falle seines Einverständnisses, quittieren müßte. Sofern kein Einverständnis vorläge, könnte er der ortsfesten Funkstation 10 eine geeignete Zeit für die Datenübertragung vorschlagen. Alternativ kann die Datenübertragung auch an anderer Stelle im Festnetz oder zum Beispiel sogar von speziell dafür geeigneten Mobilstationen initiiert werden, wobei die ortsfeste Funkstation selbst nicht aktiv beteiligt ist.

**Patentansprüche**

1. Digitales Funktelefonnetz mit ortsfesten Funkstationen und diesen zugeordneten mobilen Funkstationen, deren zum Betrieb benötigte Software in einem elektronischen Speicher abgelegt ist, **dadurch gekennzeichnet**, daß zumindest Teile der Software der mobilen Funkstationen (14, 15) in veränderbaren oder austauschbaren Bereichen des elektronischen Speichers abgelegt sind und daß die derart gespeicherte Software von einer oder über eine Funkstation (10) aus per Datenübertragung veränderbar oder austauschbar ist.

2. Digitales Funktelefonnetz nach Anspruch 1, dadurch gekennzeichnet, daß die die Grundfunktionen des Funktelefonnetzes nicht einschränkenden Teile der Software in den veränderbaren oder austauschbaren Speicherbereichen (M2) des elektronischen Speichers (23, 24) gespeichert sind.

3. Digitales Funktelefonnetz nach Anspruch 1 oder 2, dadurch gekennzeichnet, daß die Datenübertragung unter Anwendung eines Fehlersicherungsverfahrens erfolgt.